# EUROPÄISCHE PATENTSCHRIFT

(11) **EP 1 824 714 B1**
(45) Veröffentlichungstag und Bekanntmachung des Hinweises auf die Patenterteilung: **09.09.2009**
(21) Anmeldenummer: 04804646.0
(22) Anmeldetag: 02.12.2004
(51) Int. Cl.: B60S 1/34

(54) **WISCHARM SOWIE ABDECKEINHEIT FÜR EINEN WISCHARM**
WIPER ARM AND COVER FOR A WIPER ARM
BRAS D'ESSUIE-GLACE ET COUVERCLE POUR UN BRAS D'ESSUIE-GLACE

(30) Priorität: 05.12.2003 DE 10356918
(43) Veröffentlichungstag der Anmeldung: 29.08.2007
(73) Patentinhaber: ROBERT BOSCH GMBH, 70442 Stuttgart (DE)
(72) Erfinder: VAN DE ROVAART, Robert-Jan, 77815 Bühl-Neusatz (DE)
(74) Vertreter: Gleiss & Grosse
(86) Internationale Anmeldenummer: PCT/EP2004/053221
(87) Internationale Veröffentlichungsnummer: WO 2005/054017

(56) Entgegenhaltungen:
- US-A1- 2002 152 575
- PATENT ABSTRACTS OF JAPAN Bd. 2000, Nr. 26, 1. Juli 2002 (2002-07-01) -& JP 2001 247015 A (ASMO CO LTD), 11. September 2001 (2001-09-11)

## Beschreibung

### Stand der Technik

Die Erfindung geht aus von einem Wischarm sowie einer Abdeckeinheit für einen Wischarm nach den Oberbegriffen der unabhängigen Ansprüche.

Wischeranlagen mit einem oder mehreren Scheibenwischern für Kraftfahrzeuge werden mit deren Wischerlagern direkt oder indirekt über eine Platine an der Karosserie des Kraftfahrzeugs befestigt. Eine Motorwelle eines Wischermotors treibt direkt oder indirekt, beispielsweise über ein Gestänge, Kurbeln an, die mit einem Ende einer Antriebswelle für jeden Scheibenwischer fest verbunden sind. Die Antriebswelle bzw. die Lagerachse ist in einem Wischerlager gelagert. Im Lagergehäuse ist mindestens ein radiales Lager und an den Stirnseiten zwischen dem Lagergehäuse und einem mit der Antriebswelle fest verbundenen Teil ein axiales Lager vorgesehen. Die Antriebswelle ragt aus der Karosserie und bewegt einen an ihrem freien Ende befestigten Wischarm mit einem Wischblatt über eine Windschutzscheibe. Der Wischarm besitzt in der Regel ein mit der Antriebswelle drehfest verbundenes Befestigungsteil, das gelenkig mit einem Gelenkteil verbunden ist, an das sich starr eine Wischstange anschließt. Eine solche Wischeranlage ist beispielsweise aus der DE 199 38 969 A1 bekannt. Bei bekannten Wischeranlagen ist das Befestigungsteil zumindest bereichsweise mit einer kapselförmigen Abdeckeinheit abgedeckt, die gekippt werden kann, um die Antriebswelle zum Anschrauben des Wischarms an die Antriebswelle freizugeben.

Eine weitere Ausführungsform eines Wischarms ist in der US 2002/0152575 A1 beschrieben. Dabei ist vorgesehen, dass eine Abdeckeinheit mittels Gelenkvorsprüngen an dem Wischarm befestigt ist. An der Abdeckeinheit und dem Wischarm sind miteinander zusammenwirkende Mittel vorgesehen, die verhindern, dass sich die Abdeckeinheit unbeabsichtigt in eine Geschlossenstellung bewegt.

### Vorteile der Erfindung

Es wird vorgeschlagen, dass bei einem erfindungsgemäßen Wischarm eine Abdeckeinheit im gekippten Zustand mit einem Befestigungsteil des Wischarms verrastbar ist. Die Abdeckeinheit kann daher in eine definierte Position gebracht werden, in der ein Werker ohne Behinderung durch die Abdeckeinheit den Wischarm an einer Antriebswelle, vorzugsweise durch Anschrauben an eine Stirnfläche der Antriebswelle, befestigen kann. Der Wischarm kann ergonomisch und sicher montiert werden. Üblicherweise ist die Abdeckeinheit bereits an dem Wischarm befestigt, wenn dieser an ein Kraftfahrzeug montiert werden soll. Die Verrastung ist im Wesentlichen zum einmaligen Gebrauch bei der Montage des Wischarms vorgesehen; daher sind geringe Anforderungen an eine Stabilität der Verrastung ausreichend. Die Abdeckeinheit kann daher kostengünstig hergestellt werden. Die Verrastung zwischen Abdeckeinheit und Befestigungsteil kann vorzugsweise durch einen Formschluss oder auch durch Einrasten in eine Hinterschneidung erreicht werden.

Eine besonders einfache Verrastung ist möglich, wenn die Abdeckeinheit an einer Innenseite zumindest eines Seitenflügels eine nach innen ragende Rippe aufweist. Günstig ist, an den Innenseiten beider Seitenflügel der Abdeckeinheit jeweils eine nach innen ragende Rippe vorzusehen. Die Seitenflügel übergreifen zumindest bereichsweise das Befestigungsteil des Wischarms.

Die Rippe ist so angeordnet, dass sie beim Kippen der Abdeckeinheit an einer bogenförmig verlaufenden Außenkontur des Befestigungsteils entlangführbar ist. Auf diese Weise kann die Abdeckeinheit frei bis zum Verrasten der Rippe gekippt werden. Zweckmäßigerweise wird die Abdeckeinheit um etwa 90° verkippt. Die Rippe ist mit Abstand von einer Drehstütze in Richtung der Oberseite der Abdeckeinheit angeordnet.

Nach Überschreiten eines Befestigungspunkts der Kontur kann ein Formschluss zwischen Rippe und Kontur bzw. Befestigungsteil hergestellt werden. Die Rippe kann dann formschlüssig an der Kontur anliegen. Der Befestigungspunkt kann eine Ausformung der Kontur sein, die ein freies Darübergleiten der Rippe behindert. Die Rippe kann den Befestigungspunkt nicht alleine überschreiten und kann daher nicht zurückkippen, wenn sie diesen in Richtung einer Endposition passiert hat. Die Rippe bleibt sicher in der verkippten Position stehen. Ein freier Durchgang für die Montage des Wischarms auf der Antriebswelle ist sichergestellt. Alternativ kann eine Hinterschneidung an der Kontur vorgesehen sein, in der die Abdeckposition beim Verkippen in ihrer Endposition einhakt und die ebenfalls ein undefiniertes Zurückkippen verhindert. Die Abdeckeinheit ist während des Montierens des Wischerarms sichergestellt und ein undefiniertes Zurückkippen in ihre Ausgangslage wird zuverlässig vermieden. Eine Beschädigung der Abdeckeinheit durch Zurückkippen wird verhindert.

Ist an der Innenseite zumindest einer Seitenfläche der Abdeckeinheit zumindest eine Nase zum Einhaken am Befestigungsteil vorgesehen, kann die Abdeckeinheit nach der Montage des Wischarms durch den Werker einfach zurückgekippt werden und durch Einhaken der Nase sicher und fest arretiert werden. Vorteilhafterweise weist das Befestigungsteil einen zur Nase korrespondierenden Steg auf, der zum Befestigen der Abdeckeinheit von der Nase hintergreifbar ist.

Ferner wird eine Abdeckeinheit zum zumindest bereichsweisen Abdecken eines Wischarms für eine Scheibenwischanlage vorgeschlagen, bei der auf zumindest einem ihrer Seitenflügel eine nach innen weisende Rippe vorgesehen ist, mit der eine Verrastung mit einem Befestigungsteil des Wischarms herstellbar ist. Vorzugsweise ist die Abdeckeinheit kapselförmig ausgebildet. Die Abdeckeinheit ist einfach und preiswert herstellbar. Die Rippe ist im Wesentlichen zum einmaligen Gebrauch bei einer Montage des Wischerarms vorgesehen, was eine Auslegung und Herstellung der Abdeckeinheit preiswert macht.

Eine zuverlässige Verbindung für einen Dauergebrauch auf einem Wischarm ist möglich, wenn der zumindest eine Seitenflügel auf seiner Innenseite eine Nase zum Einhaken am Befestigungsteil aufweist.

Weisen beide Seitenflügel jeweils eine Rippe auf, kann die Abdeckeinheit stabil in ihrer verkippten Position zur Montage des Wischarms gehalten werden.

Bevorzugt ist die Abdeckeinheit aus einem glasfaserverstärkten Kunststoff gebildet.

### Zeichnungen

Die Erfindung wird nachfolgend in einem Ausführungsbeispiel anhand der zugehörigen Zeichnungen näher erläutert. Es zeigen:
- Fig. 1: eine Aufsicht auf einen Wischarm mit einer Abdeckeinheit und einer Wischblatteinheit;
- Fig. 2: ein Detail der Anordnung aus Fig. 1 mit einer verkippten Abdeckeinheit in Montageposition;
- Fig. 3: eine schräge Aufsicht auf eine Abdeckeinheit;
- Fig.4: eine Ansicht einer Innenfläche der Abdeckeinheit aus Fig. 3; und
- Fig. 5: einen Querschnitt durch eine Abdeckeinheit.

### Beschreibung des Ausführungsbeispiels

In den Figuren werden gleiche Bezugszeichen für gleiche Teile verwendet.

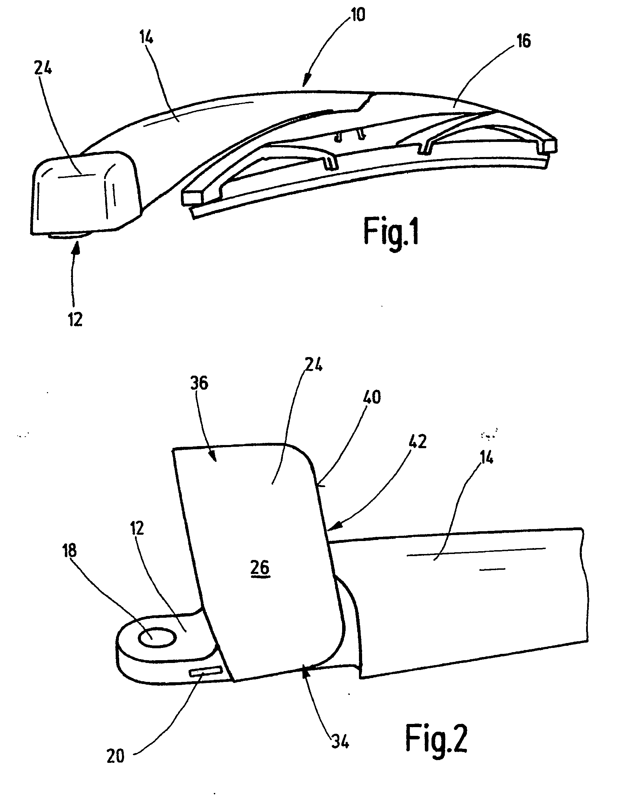

Fig. 1 zeigt eine Schrägansicht eines Wischarms 10 mit einer Wischblatteinheit 16. Der Wischarm 10 besitzt ein Befestigungsteil 12, das gelenkig mit einem Gelenkarm 14 verbunden ist. Der Gelenkarm 14 kann ein Gelenkteil und eine sich starr anschließende Wischstange umfassen oder einstückig, vorzugsweise aus Kunststoff, ausgebildet sein. An einem Ende des Gelenkarms 14 ist die Wischblatteinheit 16 eingehängt. Am gegenüberliegenden Ende schließt sich das Befestigungsteil 12 an. Das Befestigungsteil 12 besitzt an einem Ende eine Lagerstelle, über die das Befestigungsteil 12 über ein auf eine aus einer Karosserie ragende Antriebswelle Befestigungsmittel mit der Antriebswelle drehfest, beispielsweise durch eine Bohrung aufschraubbar, verbindbar ist. Alternativ können andere geeignete Befestigungsarten gewählt werden.

Das Befestigungsteil 12 ist zumindest im Bereich der Verbindung zur Antriebswelle durch die zur Freigabe der Bohrung kippbar befestigte Abdeckeinheit 24 abgedeckt. Die Abdeckeinheit 24 ist kapselförmig ausgebildet. Um den Wischarm 10 mit der Antriebswelle zu verbinden, wird die Abdeckeinheit 24 in etwa um 90° nach vorne in Richtung Gelenkarm 14 gekippt und sichergestellt, wie in Fig. 2 dargestellt ist. Dadurch wird eine Bohrung 18 freigegeben, durch die der Wischarm 10 an einer Antriebswelle befestigt werden kann. Im gekippten Zustand ist die Abdeckeinheit 24 mit dem Befestigungsteil 12 verrastbar. An einer Seitenfläche des Befestigungsteils 12 ist ein Steg 20 angebracht, an dem die Abdeckeinheit 24, die nach der Montage wieder in ihre Ausgangslage zurückgekippt ist, eingehakt werden kann um diese dauerhaft auf dem Befestigungsteil 12 zu befestigen. Zweckmäßigerweise ist auf beiden Seitenflächen des Befestigungsteils 12 ein solcher Steg 20 vorgesehen. An ihrer Oberseite 40 weist die Abdeckeinheit 24 eine Öffnung 42 auf, in die ein Finger des Gelenkarms 14 ragt.

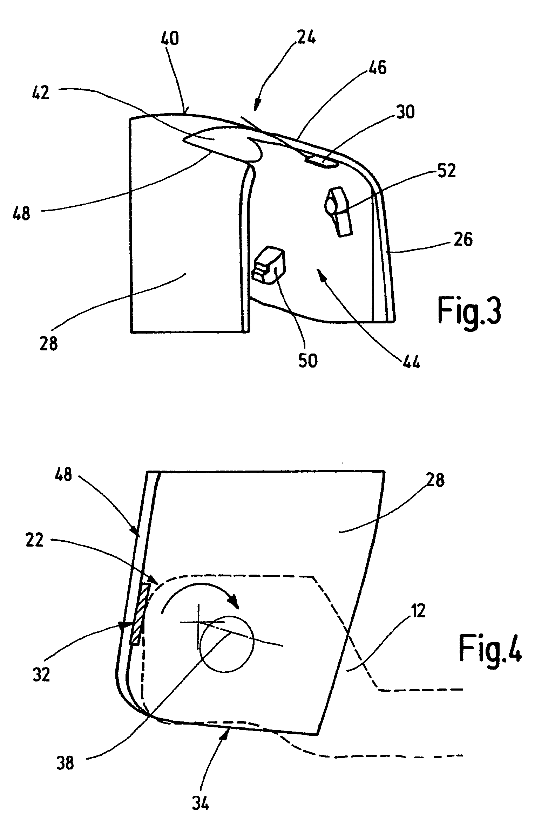

Die Fig. 3 zeigt eine schräge Aufsicht auf eine Abdeckeinheit 24. Diese ist kapselförmig, in etwa U-förmig ausgebildet mit zwei nach vorne zu einer Vorderseite 34 offenen Seitenflügeln 26, 28, die über eine geschlossene Rückseite 36 verbunden sind. Die Konturen der Seitenflügel 26, 28 an der Vorderseite 34 sind an die Kontur des Gelenkarms 14 angepasst, so dass die Abdeckeinheit 24 gekippt werden kann. In ihrer Oberseite 40 ist eine von der Vorderseite 34 ausgehende Öffnung 42 eingelassen, die mit einem in die Öffnung 42 hineinragenden Finger des Gelenkarms 14 korrespondiert (Fig. 2). Die Öffnung 42 wird an den Längsseiten der Abdeckeinheit 24 durch je einen Schenkel 46, 48 begrenzt. Wird die Abdeckeinheit 24 zur Montage des Wischarms 10 gekippt, bietet die Öffnung 42 Platz für den Finger des Gelenkarms 14.

Weiterhin ist eine Innenfläche des Seitenflügels 26 der Abdeckeinheit 24 erkennbar. Benachbart zum Schenkel 46 entfernt von der Oberseite 40 erstreckt sich in etwa parallel zum Schenkel 46 eine nach innen weisende Rippe 30, die ein Rastmittel zum Verrasten der Abdeckeinheit 24 bildet. Unterhalb der Rippe 30 weist der Seitenflügel 26 auf seiner Innenseite eine Drehstütze 52 auf, die mit einer korrespondierende Halterung am Befestigungsteil 12 verbunden werden kann. Um diese Drehstütze 52 wird die Abdeckeinheit 24 um eine Drehachse gekippt. Die Innenfläche der gegenüberliegenden Seitenfläche 28 ist symmetrisch aufgebaut und weist eine entsprechende, nicht erkennbare Rippe und Drehstütze auf. In einem unteren Bereich auf der Innenfläche des Seitenflügels 26 ist eine Nase 50 angeordnet, die sich an einem Steg 20 des Befestigungsteils 12 (Fig. 2) festhaken kann, um nach der Montage des Wischarms 10 die Abdeckeinheit 24 möglichst stabil und dauerhaft mit dem Befestigungsteil 12 zu verbinden.

Fig. 4 verdeutlicht, wie eine Rippe 32 des Seitenflügels 28 beim Kippen der Abdeckeinheit 24 um eine Drehachse 38 einer nicht dargestellten Drehstütze an einer Kontur 22 eines Befestigungsteils 12 entlangführbar ist. Die Rippe 32 ist benachbart zu einem Schenkel 48 im Bereich der Oberseite 40 der Abdeckeinheit 24 parallel zum Schenkel 48 angeordnet. Nach Überschreiten eines Befestigungspunkts der Kontur 22 ist ein Formschluss zwischen der Rippe 32 und der Kontur 22 herstellbar. Das Befestigungsteil 12 ist der Klarheit wegen gestrichelt eingezeichnet. Der Befestigungspunkt behindert eine freie Bewegung der Abdeckeinheit 24. Nach erfolgter Montage wird die Abdeckeinheit 24 in Richtung des Pfeils zurückgekippt. Dabei muss der Befestigungspunkt der Kontur 22 mit etwas Kraftanwendung überwunden werden.

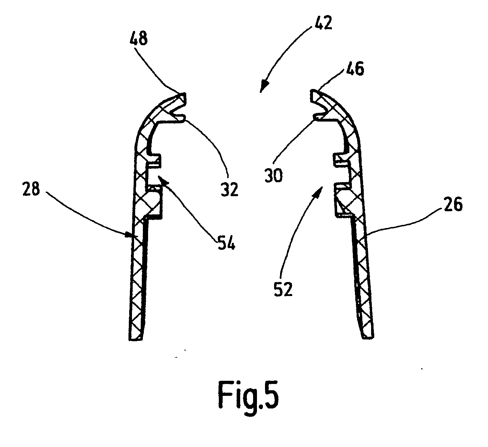

Fig. 5 zeigt einen Querschnitt durch die Abdeckeinheit 24 durch einen Bereich mit Rippen 30, 32 und Drehstützen 52, 54. Ein erster und ein zweiter Seitenflügel 26, 28 bilden im Querschnitt eine U-förmige Kontur, die im Scheitel eine Öffnung 42 aufweist, die von Schenkeln 46 und 48 begrenzt ist. Entlang der Kontur in Richtung zu den Drehstützen 52, 54 sind an den jeweiligen Innenseiten der Seitenflügel 26, 28 zwischen den Schenkeln 46 und 48 und den Drehstützen 52, 54 Rippen 30, 32 angeordnet. Die Abdeckeinheit 24 ist bevorzugt aus Kunststoff, besonders bevorzugt aus einem glasfaserverstärkten Kunststoff, gebildet.

## Patentansprüche

1. Wischarm (10) für eine Scheibenwischanlage mit einem Befestigungsteil (12) zum Verbinden mit einer Antriebswelle, wobei eine kippbar befestigte Abdeckeinheit (24) mit einer Oberseite (40) und zwei nach einer Vorderseite (34) offenen Seitenflügeln (26,28), die über eine geschlossene Rückseite (36) verbunden sind, zur zumindest bereichsweisen Freigabe des Befestigungsteils (12) vorgesehen ist und die Abdeckeinheit (24) im gekippten Zustand mit dem Befestigungsteil (12) verrastbar ist, **dadurch gekennzeichnet, dass** die Abdeckeinheit (24) an einer Innenseite zumindest eines Seitenflügels (26,28) eine nach innen ragende Rippe (30,32) zur Verrastung der Abdeckeinheit (24) im gekippten Zustand aufweist, wobei die Rippe (30,32) mit Abstand von einer Drehstütze (52,54) in Richtung der Oberseite (40) der Abdeckeinheit (24) angeordnet und beim Kippen der Abdeckeinheit (24) zumindest bereichsweise an einer bogenförmig verlaufenden Außenkontur (22) des Befestigungsteils (12) entlangführbar ist.

2. Wischarm nach Anspruch 1, **dadurch gekennzeichnet, dass** ein Formschluss zwischen Rippe (30,32) und Befestigungsteil (12) herstellbar ist.

3. Wischarm nach Anspruch 1 oder 2, **dadurch gekennzeichnet, dass** an der Innenseite zumindest einer Seitenfläche (26,28) der Abdeckeinheit (24) zumindest eine Nase (50) zum Einhaken am Befestigungsteil (12) vorgesehen ist.

4. Wischarm nach Anspruch 3, **dadurch gekennzeichnet, dass** das Befestigungsteil (12) einen zur Nase (50) korrespondierenden Steg (20) aufweist, der zum Befestigen der Abdeckeinheit (24) von der Nase (50) hintergreifbar ist.

5. Abdeckeinheit (24) zum zumindest bereichsweisen Abdecken eines Wischarms (10) für eine Scheibenwischanlage, mit einer Oberseite und zwei nach einer Vorderseite (34) offenen Seitenflügeln (26,28), die über eine geschlossene Rückseite (36) verbunden sind, **dadurch gekennzeichnet, dass** auf zumindest einem der Seitenflügel (26,28) eine nach innen weisende Rippe (30,32) vorgesehen ist, mit der in einem gekippten Zustand eine Verrastung mit dem Befestigungsteil (12) herstellbar ist, wobei die Rippe (30,32) mit Abstand von einer Drehstütze (52,54) in Richtung der Oberseite (40) der Abdeckeinheit (24) angeordnet und beim Kippen der Abdeckeinheit (24) zumindest bereichsweise an einer bogenförmig verlaufenden Außenkontur (22) des Befestigungsteils (12) entlangführbar ist.

6. Abdeckeinheit nach Anspruch 5, **dadurch gekennzeichnet, dass** der zumindest eine Seitenflügel (26,28) auf seiner Innenseite eine Nase (50) zum Einhaken am Befestigungsteil (12) aufweist.

7. Abdeckeinheit nach Anspruch 5 oder 6, **dadurch gekennzeichnet, dass** beide Seitenflügel (26,28) jeweils eine Rippe (30,32) aufweisen.

8. Abdeckeinheit nach einem der Ansprüche 5 bis 7, **dadurch gekennzeichnet, dass** sie aus einem glasfaserverstärkten Kunststoff gebildet ist.

## Claims

1. Wiper arm (10) for a window wiper system, with a fastening part (12) for connection to a drive shaft, wherein a tiltably fastened cover unit (24) having a top side (40) and two side wings (26, 28) which are open to a front side (34) and are connected via a closed rear side (36) is provided for at least partially releasing the fastening part (12), and the cover unit (24) can be latched in the tilted state to the fastening part (12), **characterized in that,** on an inner side of at least one side wing (26, 28), the cover unit (24) has an inwardly projecting rib (30, 32) for the latching of the cover unit (24) in the tilted state, the rib (30, 32) being arranged at a distance from a rotary support (52, 54) in the direction of the top side (40) of the cover unit (24) and, upon tilting of the cover unit (24), can be guided at least partially along a curved outer contour (22) of the fastening part (12).

2. Wiper arm according to Claim 1, **characterized in that** a form-fitting connection can be produced between the rib (30, 32) and fastening part (12).

3. Wiper arm according to Claim 1 or 2, **characterized in that** at least one lug (50) for hooking on the fastening part (12) is provided on the inner side of at least one side surface (26, 28) of the cover unit (24).

4. Wiper arm according to Claim 3, **characterized in that** the fastening part (12) has a web (20) which corresponds to the lug (50) and can be engaged behind by the lug (50) in order to fasten the cover unit (24).

5. Cover unit (24) for at least partially covering a wiper arm (10) for a window wiper system, with a top side and two side wings (26, 28) which are open towards a front side (34) and are connected via a closed rear side (36), **characterized in that** an inwardly pointing rib (30, 32) is provided on at least one of the side wings (26, 28), which rib can be used, in a tilted state, to produce a latching connection to the fastening part (12), the rib (30, 32) being arranged at a distance from a rotary support (52, 54) in the direction of the top side (40) of the cover unit (24) and, upon tilting of the cover unit (24), being guided at least partially along a curved outer contour (22) of the fastening part (12).

6. Cover unit according to Claim 5, **characterized in that** the inner side of the at least one side wing (26, 28) has a lug (50) for hooking on the fastening part (12).

7. Cover unit according to Claim 5 or 6, **characterized in that** both side wings (26, 28) have a respective rib (30, 32).

8. Cover unit according to one of Claims 5 to 7, **characterized in that** it is formed from a glass-fibre-reinforced plastic.

## Revendications

1. Bras d'essuie-glace (10) pour une installation d'essuie-glace comprenant une partie de fixation (12) pour la connexion à un arbre d'entraînement, une unité de couvercle (24) fixée de manière rabattable avec un côté supérieur (40) et deux ailes latérales (26, 28) ouvertes vers un côté avant (34), qui sont connectées par un côté arrière fermé (36), étant prévue pour libérer au moins en partie la partie de fixation (12), et l'unité de couvercle (24) pouvant être encliquetée dans l'état basculé avec la partie de fixation (12), **caractérisé en ce que** l'unité de couvercle (24) présente sur un côté interne d'au moins une aile latérale (26, 28), une nervure saillant vers l'intérieur (30, 32) pour l'encliquetage de la partie de couvercle (24) dans l'état basculé, la nervure (30, 32) étant disposée à distance d'un support rotatif (52, 54) dans la direction du côté supérieur (40) de l'unité de couvercle (24) et lors du basculement de l'unité de couvercle (24), pouvant être guidée au moins en partie le long d'un contour extérieur (22) de la partie de fixation (12) s'étendant en forme d'arc.

2. Bras d'essuie-glace selon la revendication 1, **caractérisé en ce que** l'on peut établir un engagement par coopération de forme entre la nervure (30, 32) et la partie de fixation (12).

3. Bras d'essuie-glace selon la revendication 1 ou 2, **caractérisé en ce que** l'on prévoit sur le côté intérieur d'au moins une face latérale (26, 28) de l'unité de couvercle (24) au moins un nez (50) pour l'accrochage à la partie de fixation (12).

4. Bras d'essuie-glace selon la revendication 3, **caractérisé en ce que** la partie de fixation (12) présente une patte (20) correspondant au nez (50), qui peut être saisie par l'arrière par le nez (50) pour fixer l'unité de couvercle (24).

5. Unité de couvercle (24) pour recouvrir au moins en partie un bras d'essuie-glace (10) pour une installation d'essuie-glace, comprenant un côté supérieur et deux ailes latérales (26, 28) ouvertes vers un côté avant (34), qui sont connectées par le biais d'un côté arrière fermé (36), **caractérisée en ce que** sur au moins l'une des ailes latérales (26, 28) est prévue une nervure (30, 32) tournée vers l'intérieur, avec laquelle on peut établir dans l'état basculé un encliquetage avec la partie de fixation (12), la nervure (30, 32) étant disposée à distance d'un support rotatif (52, 54) dans la direction du côté supérieur (40) de l'unité de couvercle (24) et lors du basculement de l'unité de couvercle (24), pouvant être guidée au moins en partie le long d'un contour extérieur (22) de la partie de fixation (12) s'étendant en forme d'arc.

6. Unité de couvercle selon la revendication 5, **caractérisée en ce que** l'au moins une aile latérale (26, 28) présente sur son côté intérieur un nez (50) pour l'accrochage à la partie de fixation (12).

7. Unité de couvercle selon la revendication 5 ou 6, **caractérisée en ce que** les deux ailes latérales (26, 28) présentent chacune une nervure (30, 32).

8. Unité de couvercle selon l'une quelconque des revendications 5 à 7, **caractérisée en ce qu'**elle est formée en un plastique renforcé par des fibres de verre.
